Europäisches Patentamt

European Patent Office

Office européen des brevets

(11) Publication number: **0 508 444 A2**

# EUROPEAN PATENT APPLICATION

(21) Application number: **92106232.9**

(22) Date of filing: **10.04.92**

(51) Int. Cl.⁵: **G06F 9/46**

(30) Priority: **12.04.91 JP 79474/91**

(43) Date of publication of application:
**14.10.92 Bulletin 92/42**

(84) Designated Contracting States:
**DE FR GB NL**

(71) Applicant: **NEC CORPORATION**
**7-1, Shiba 5-chome Minato-ku**
**Tokyo 108-01(JP)**

(72) Inventor: **Kumamoto, Chiaki, c/o NEC**
**Corporation,Ltd.**
**17-11,Takanawa 2 chome**
**Minato-ku, Tokyo(JP)**

(74) Representative: **Vossius & Partner**
**Siebertstrasse 4 P.O. Box 86 07 67**
**W-8000 München 86(DE)**

(54) Multitask controlling method and apparatus for use in implementing the same.

(57) The name for identifying the task group which is applied to a task belonging to the same task group is selected from a management table for managing the name for identifying the task group provided at a system area of a main memory to set the selected name for identifying the task group to the field of an area for retaining the name for identifying the task group of a task group control block, which is provided at a user area of the main memory, to enable or block the execution of the task according to the value of the dispatching control flag. If any arbitrary task within the same group reaches the breaking point, then the dispatching control flag is put into the blocking condition to block the execution of all the tasks within the same group by issuing an interrupting request to the task being executed, which has the same name for identifying the task group. With this condition, the processing is passed to the debugging and, after the debugging has been completed, the dispatching control flag is enabled to enable the reexecution of all the tasks, so that the multitask job can be processed per unit of the same group to ease the debugging.

FIG.2

The present invention relates to a multitask controlling method in a data processing system, and particularly to a task controlling system and an apparatus for implementing the same in which tasks (multitask) are concurrently operated on a multiprocessor system.

Conventionally, in debugging a program in the data processing system, an instruction code has been embedded on a source code of the program to pass control to a debug routine to set a breaking point, and a state in which the task is being executed at the moment when the breaking point is reached is stored at the point, based on which the debugging has been conducted.

However, recently, in order to speedize the data processing, instead of sequentially processing a single job as a single task on a single processor, each task has been concurrently executed, on a plurality of processors, as a multitask job arranged with a plurality of independent tasks.

In this case, according to the prior program debugging system, since the breaking point is set closed into each task, other tasks each constituting the same multitask job cannot recognize that a certain task has reached the breaking point, and continues its execution as is. Therefore, it is impossible to examine how the other associated tasks are being executed when a certain task has reached the breaking point.

Further, there exists a problem that, since the execution of other tasks is continued, common variables between the tasks are updated, which has called for much time for debugging the multitask job.

SUMMARY OF THE INVENTION

The present invention was made to solve the above-described problem, and its object is to provide a multitask controlling method and an apparatus for implementing the same in which, when any arbitrary task constituting a multitask job reaches the breaking point, or generates an exceptional state, the execution of all the tasks constituting the same multitask job are stopped with their executing environment retained and, then, are made reexecutable to each the debugging of the multitask job.

According to the multitask controlling method of the present invention, there is provided a multitask controlling method in a multiprocessor system for concurrently executing a plurality of tasks, which each constitute a multitask job, on a plurality of processors, in which, when any arbitrary task which constitutes the multitask job reaches a preset breaking point or generates an exceptional condition, the execution of that task and all other tasks within the same multitask job group is stopped and the execution of all the tasks within that multitask job group is resumed.

In addition, a multitask controlling mechanism according to the present invention relates to one in a multiprocessor system for concurrently executing a plurality of tasks, which constitute a multitask job, on a plurality of processors, comprising a means for recognizing a multitask job group to which the tasks being executed on each processor each belong, a means for issuing an instruction for temporarily interrupting the execution of the task being executed to any arbitrary processor, a means for blocking all the tasks belonging to any arbitrary multitask job group from transiting to the executing condition and a means for releasing the blockage of the transition of that task to the executing condition.

In consequence, according to the present invention, an advantage can be achieved in which, when any arbitrary task, which constitutes a multitask job, reaches a preset breaking point or generates an exceptional condition, the execution of all the tasks, which constitute the same multitask job, may be blocked with their executing environment retained, and their execution may be resumed to ease the debugging of the multitask job.

Next, the present invention will be described in greater detail with reference to the accompanying drawings in which:

BRIEF DESCRIPTION OF THE DRAWINGS

Fig. 1 is a view illustrating an arrangement of a specific embodiment according to the present invention;
Fig. 2 is an explanatory view of the content of a main memory of Fig. 1;
Fig. 3 is a view illustrating an example of a management table of the task being executed of Fig. 2;
Fig. 4 is a view illustrating an example of a management table for managing the name identifying the task group of Fig. 2; Fig. 5 is a flowchart of the processes according to the embodiment of he present invention when the task is rolled in:
Fig. 6 is a flowchart of the processes according to the embodiment of the present invention when the task is rolled out;
Fig. 7 is a flowchart of the processes when the execution of the task is stopped according to the embodiment;
Fig. 8 is a flowchart of the processes according to the embodiment of the present invention when a signal for interrupting the processor is received; and Fig. 9 is a flowchart of the processes when the execution of the task is resumed according to the embodiment.

## DETAILED DESCRIPTION OF THE PREFERRED EMBODIMENT

Although a case of four processors and four tasks, which constitute a multitask job, is hereinafter described by way of example for the convenience of description, the present invention is also be applicable to a case of their greater number.

In addition, although the description is made by noting a multitask job, the same may encompass the job unit as well.

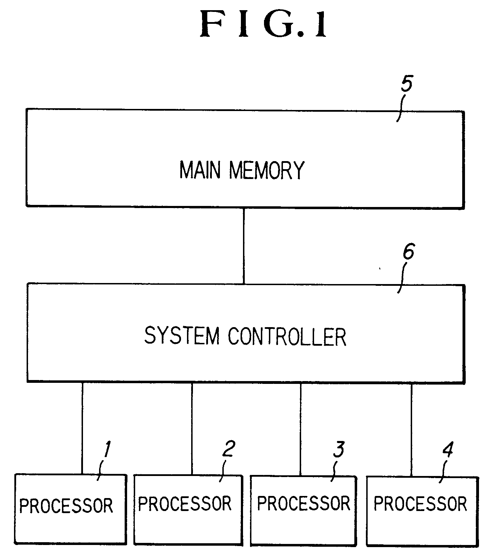

Fig. 1 is an arrangement view of the multiprocessor system according to a specific embodiment of the present invention, and is comprised of four processors 1 through 4, a main memory 5 and a system controlling unit 6. The main memory 5 stores task control information, program, data and the like, which each operate on the processors 1 through 4. The system control unit 6 controls the accesses between the processors 1 through 4 and the main memory 5.

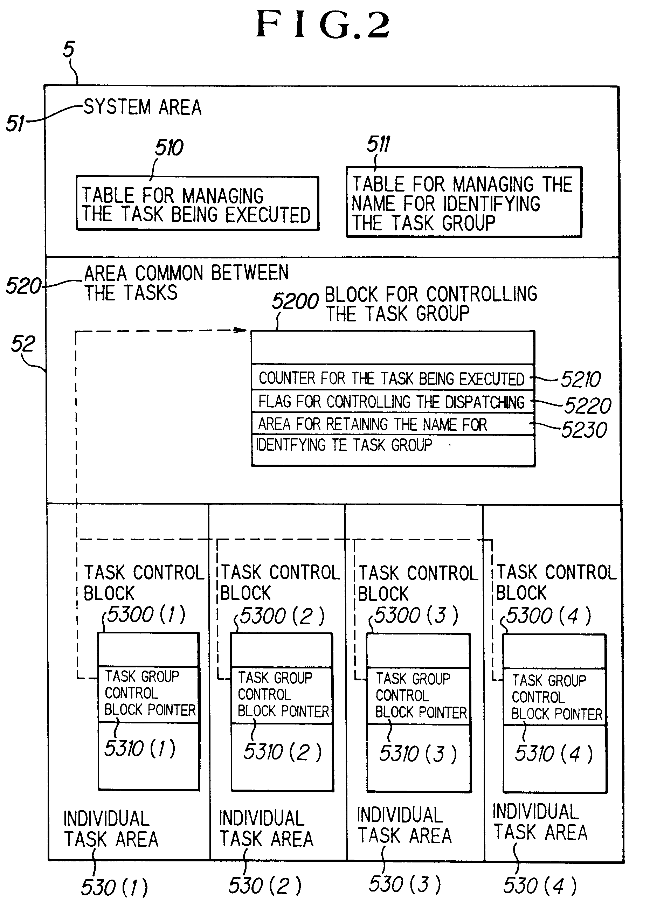

Fig. 2 is a view for explaining the content of the main memory 5, in which the man memory 5 is divided into a system area 51 and a user area 52. At the system area 51, a management table 510 for identifying the task being executed and a management table 511 for the task group identifying name exist. The user area 52 is divided and used for each job, and the area allocated to a job is arranged with independent areas 530(i) (where: i = 1 through 4) for each task constituting the multitask job and an area 520 common between the tasks.

A task control block 5300(i) in which a task group control block pointer 5310(i) is present exists within the independent areas 530(i) for each task, while a task group control block 5200, which is pointed to by a task group control block pointer 5310(i), further exists at the area 520 common to the tasks. The following fields are included within the task group control block 5200.

1. Counter 5210 for the task being executed:

This field retains the number of tasks which are operating on either of the processors 1 through 4 of Fig. 1, among ones belonging to the corresponding task group.

2. Dispatching control flag 5220:

This field is one for controlling the dispatching of all the tasks belonging to the corresponding task group en bloc to retain them with a mark indicating whether they can be dispatched (= 0) or not (≠ b). If they cannot be dispatched (≠ 0), then their dispatching to the processors 1 through 4 is blocked by a task dispatching mechanism of the system.

3. Area 5230 for retaining the name identifying the task group:

This field serves to retain the name identifying the task group dispatched in common to all the tasks belonging to the corresponding task group. This name identifying the task group is assigned to a task group by means of the task dispatching mechanism, and at least one task within the task group can become effective for execution on the processors 1 through 4.

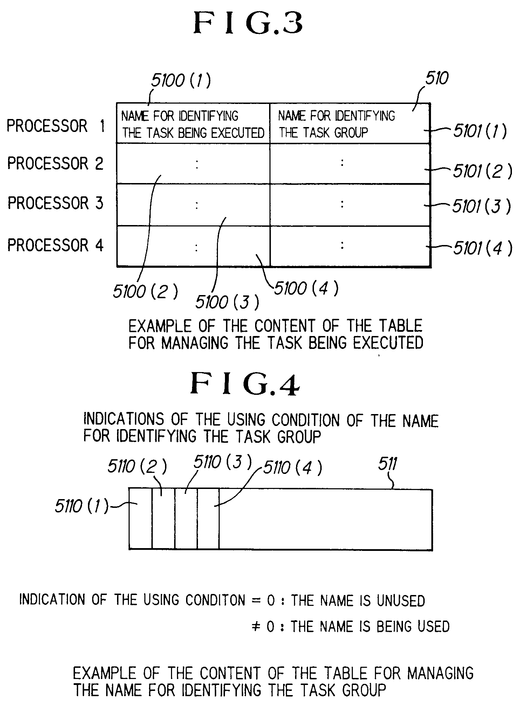

Fig. 3 illustrates an example of the content of the management table 510 for managing the task being executed, which exists only one within the system area 51, and contains the names 5100(j) (where: j = 1 through 4) for identifying the task being executed and the names 5101(j) for identifying the task group which is assigned to the corresponding task being executed, for each processor. The names 5101(j) for identifying the task group are ones for identification, which is assigned for each task group unit by the task dispatching mechanism and, if the tasks belonging to the same task group are being executed on different processors, then the same value is set to the field of the name 5101(j) for identifying each task group. Incidentally, if no task being executed is present on the processors, then it is determined to be vacant, and a value which allows the corresponding state to be identified is set to the name 5100(j) for identifying the task being executed.

Fig. 4 is a view illustrating an example of the content of the management table 511 for managing the name identifying the task group, which exists only one in the system area 51, which contains an indication 5110(k)(where: k = 1 through 4) of the using condition of the name identifying task group.

The indication 5110(k) of the using condition of the task group takes a used (= 0) or unused (≠ 0) state with the areas corresponding to the number of processors used. If a first task of a task group starts to be executed on either of the processors 1 through 4, then the unused identifying name k is assigned to the corresponding task group, and the indication 5110(k) of the name being used becomes occupied. If the task being executed on the processors 1 through 4 becomes non-existent within a task group, then the indication 5110(k) of the name being used, which corresponds to the name k, which had been being used, becomes unused.

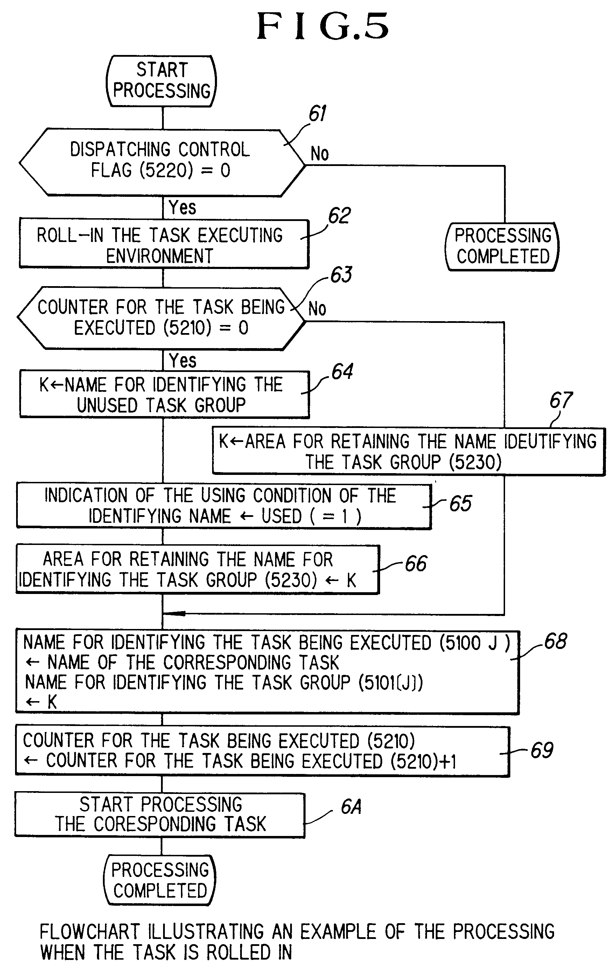

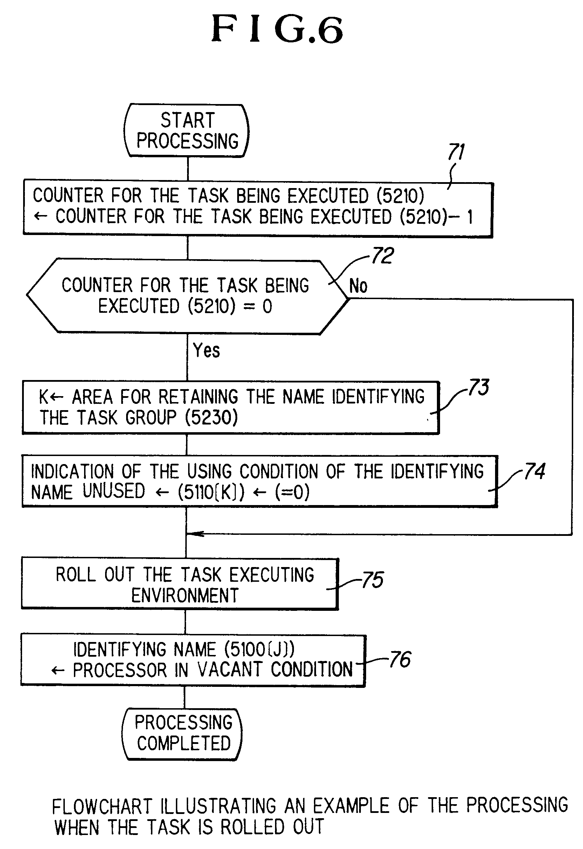

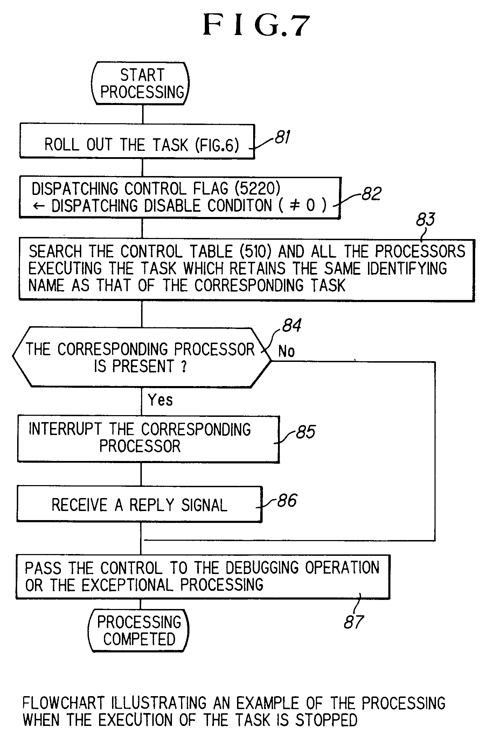

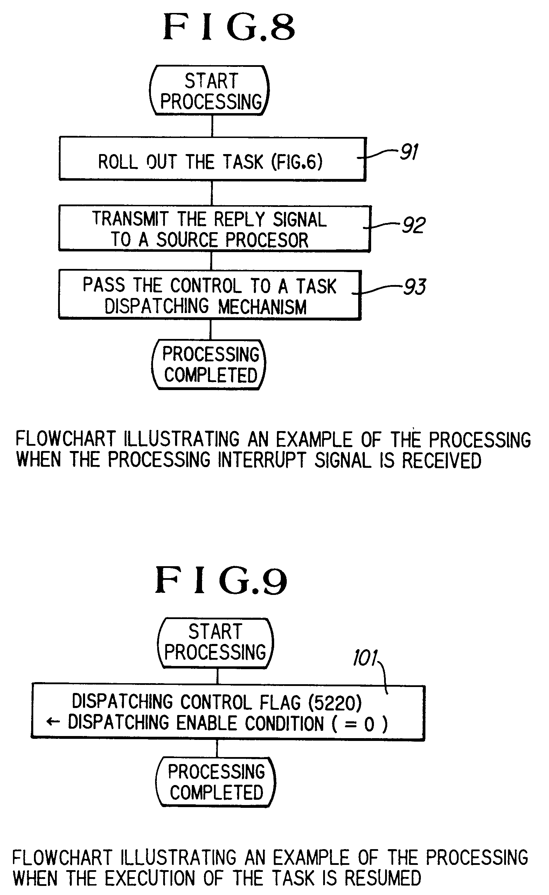

Next, the operation of the invention is described. Figs. 5 and 6 are respectively a flowchart illustrating an example of the processing for managing the name identifying the task group, and Fig. 5 is a flowchart of the processes when the task is rolled in and Fig. 6 is a flowchart of the processes when the task is rolled out.

First, if a task within a multitask job is selected as the task to be subsequently executed by the task dispatching mechanism, then a dispatching control flag 5220 within the task group control block 5200 is read out by using a block pointer 5310(i) for managing the task group within the task control block 5300(i), which corresponds to that task, to check its indication (61). If the flag is in the condition in which it cannot be dispatched (≠ 0), then the processing is completed, and the corresponding task is not dispatched. If the flag is in the condition in which it can be dispatched (= 0), then the task executing environment is rolled into the processor where the task is to be executed (62).

Next, the counter 5210 for counting the task to be executed is read out from the task group control block 5200 for checking (63). Unless the task being executed on the processors 1 through 4 is present within the corresponding task group, that is, if the counter 5210 for counting the task being executed indicates "0", then the unused identifying name k is selected from the management table 511 for managing the name identifying the task group within the system area 51 of the main memory 5 to apply to the corresponding task group (64) to set the indication 5110(k) to the "used" condition (= 1) (65). Further, the name k for identifying the task group, which is applied to area 5230 for retaining the name for identifying the task group of the task group control block 5200, is set (66).

In addition, if, in step 63, any task being executed on the processors 1 through 4 is already present within the corresponding task group, that is, the counter 5210 for counting the task being executed is not "0", then the name k for identifying the task group, which is set to the area 5230 for retaining the name for identifying the task group of the task group control block 5200, is read out (67).

Next, the corresponding task name and the name k for identifying the task group, which was obtained in step 64 or step 67, are each set to the field of the identifying name 5100(j) of the management table 510 within the system area 51, which corresponds to the executing processor, and the field of the identifying name 5101(j) for identifying the task group respectively (68).

Next, the task counter 5210 within the task group control block 5200 is incremented by one to rewrite to the original position (69) to start with processing the corresponding task (6A).

When the roll-out processing of Fig. 6 is carried out, if a certain task loses its right to be executed while being executed, and transits from the executing condition temporarily to another condition, then the counter 5210 within the task group control block 5200 is read to decrement its count by one to rewrite to the original position (71). The updated counter 5210 is checked (72) in step 71. If the corresponding task turned out to be the last task within that task group, which is being executed on the processors 1 through 4, that is, the counter 5210 indicates "0", then the name k for identifying the task group, which is set to the area 5230 for retaining the name identifying the task group within the task group identifying block 5200, is read (73) to set to the unused condition (= 0) the corresponding indication 5110(K) within the management table 511 of the system area 51 (74). Further, if, in step 72, any task being executed on the processors 1 through 4 is already present within the corresponding task group, that is, the counter 5210 does not indicate "0", then steps 73 and 74 are not executed.

Next, the executing environment associated with the corresponding task is rolled out (75). Then, the field for the name 5100(j) identifying the task being executed, within the management table 510 of the system area 51, which corresponds to processor which had been executing the corresponding task, is set to the processor vacant condition (76).

The operation when the execution of the task is stopped will now be described. If a certain task has reached to a predetermined breaking point, or an exceptional condition is generated during its execution, then the processing as shown in Fig. 7 when the task is stopped is executed. First, the task being executed is rolled out according to each step shown in Fig. 6 (81), and the dispatching control flag 5220 contained within the task group control block 5200 is set to the dispatching disable condition (= 1) (82). The management table 510 within the system area 51 is searched to find all the processors which are executing the task retaining the same identifying name as that of the corresponding task (83) to check whether any corresponding processor is present or not (84). If yes, then an interruption is made to all the processors detected in step 83 (85). As this means for interrupting the processor, an interprocessor communication method is generally utilized.

Then, a reply signal is received from the interrupted processor (86) to pass the control to the debug process or exceptional process (87).

Next, the processing when the signal for interrupting the processor is received is described. If the signal for interrupting the processor, which was generated in the preceding step 85, is received, then the operation of Fig. 8 when the signal for interrupting the processor is received is accomplished.

In step shown in Fig. 6, the task being executed is rolled out (91) to transmit a reply signal to the source processor (92) to pass the control to the task dispatching mechanism of the system (93). Incidentally, in this case, since the corresponding task group is set in the dispatching disable condition by the preceding step 82 in the task stopping operation shown in Fig. 7, the same task cannot be dispatched again.

The processing when the execution of the task is resumed will be described.

The processing is conducted from the condition shown in Fig. 9 in which the execution of the task is resumed, when the debug operation or trouble shooting is completed.

The dispatching control flag 5220 contained within the task group control block 5200 is set to the dispatching enable condition (= 0)(101). As a result, in the following task roll-in operation, it becomes possible to dispatch all the tasks within the corresponding multitask job group. In addition, it is only the task(s) belonging to the same multitask job that is blocked from being executed during the above-described operation, and if the job group differs, then no effect is exercised on its execution.

As seen from above, it becomes easy to debug the multitask job.

## Claims

1. Multitask controlling method in a multiprocessor system for concurrently executing a plurality of tasks each constituting a multitask job on a plurality of processors in which any arbitrary task constituting said multitask job stops the execution of itself and all other tasks within the same multitask job group at a preset breaking point or at a point when any exceptional condition is generated, and then resumes the execution of all tasks within the multitask job group.

2. Multitask controlling apparatus in a multiprocessor system for concurrently executing a plurality of tasks each constituting a multitask job on a plurality of processors comprising:

a means for recognizing a multitask job group to which a task being executed on each processor belongs;

a means for issuing an instruction for temporarily interrupting the execution of the task being executed to any arbitrary processor

a means for blocking all the tasks which belong to an arbitrary multitask job from transiting to the executing condition; and

a means for releasing the blocking of said task from being transited to the executing condition.

# F I G.1

MAIN MEMORY

SYSTEM CONTROLLER

PROCESSOR PROCESSOR PROCESSOR PROCESSOR

# FIG.2

**5**

**51** SYSTEM AREA

**510** TABLE FOR MANAGING THE TASK BEING EXECUTED

**511** TABLE FOR MANAGING THE NAME FOR IDENTIFYING THE TASK GROUP

**520** AREA COMMON BETWEEN THE TASKS

**52**

**5200** BLOCK FOR CONTROLLING THE TASK GROUP

| |
|---|
| COUNTER FOR THE TASK BEING EXECUTED — **5210** |
| FLAG FOR CONTROLLING THE DISPATCHING — **5220** |
| AREA FOR RETAINING THE NAME FOR — **5230** |
| IDENTFYING TE TASK GROUP · |

| TASK CONTROL BLOCK **5300(1)** | TASK CONTROL BLOCK **5300(2)** | TASK CONTROL BLOCK **5300(3)** | TASK CONTROL BLOCK **5300(4)** |
|---|---|---|---|
| TASK GROUP CONTROL BLOCK POINTER **5310(1)** | TASK GROUP CONTROL BLOCK POINTER **5310(2)** | TASK GROUP CONTROL BLOCK POINTER **5310(3)** | TASK GROUP CONTROL BLOCK POINTER **5310(4)** |
| INDIVIDUAL TASK AREA | INDIVIDUAL TASK AREA | INDIVIDUAL TASK AREA | INDIVIDUAL TASK AREA |
| **530(1)** | **530(2)** | **530(3)** | **530(4)** |

# F I G.3

5100 (1)                                    510

| | NAME FOR IDENTIFYING<br>THE TASK BEING EXECUTED | NAME FOR IDENTIFYING<br>THE TASK GROUP | |
|---|---|---|---|
| PROCESSOR 1 | | | 5101 (1) |
| PROCESSOR 2 | : | : | 5101 (2) |
| PROCESSOR 3 | : | : | 5101 (3) |
| PROCESSOR 4 | : | : | 5101 (4) |

5100 (2)    5100 (3)    5100 (4)

EXAMPLE OF THE CONTENT OF THE TABLE
FOR MANAGING THE TASK BEING EXECUTED

# F I G.4

INDICATIONS OF THE USING CONDITION OF THE NAME
FOR IDENTIFYING THE TASK GROUP

5110 (2)    5110 (3)   5110 (4)              511

5110 (1)

INDICATION OF THE USING CONDITON = 0 : THE NAME IS UNUSED

≠ 0 : THE NAME IS BEING USED

EXAMPLE OF THE CONTENT OF THE TABLE FOR MANAGING
THE NAME FOR IDENTIFYING THE TASK GROUP

# FIG.5

```
                    ┌─────────────┐
                    │   START     │
                    │ PROCESSING  │
                    └─────────────┘
                           │
                           │                          61
              ┌────────────────────────┐
             ╱   DISPATCHING CONTROL     ╲       No
            ╱      FLAG (5220) = 0         ╲─────────────────────┐
            ╲                              ╱                      │
             ╲                            ╱                       │
              └────────────┬─────────────┘                       │
                        Yes │               62                   │
              ┌────────────────────────────┐            ┌──────────────┐
              │ ROLL-IN THE TASK EXECUTING │            │ PROCESSING   │
              │       ENVIRONMENT          │            │ COMPLETED    │
              └────────────┬───────────────┘            └──────────────┘
                           │                 63
              ┌────────────────────────────┐
             ╱  COUNTER FOR THE TASK BEING   ╲   No
            ╱      EXECUTED (5210) = 0        ╲──────────────────────┐
            ╲                                 ╱                      │
             └─────────────┬──────────────────┘                     │
                        Yes │               64                       │
              ┌────────────────────────────┐                        │
              │ K←NAME FOR IDENTIFYING THE  │                        │
              │      UNUSED TASK GROUP      │              67        │
              └────────────┬───────────────┘                        │
                           │        ┌────────────────────────────────────────┐
                           │        │ K←AREA FOR RETAINING THE NAME IDEUTIFYING │
                           │        │       THE TASK GROUP (5230)              │
                           │        └────────────────────┬───────────────────┘
              ┌────────────────────────────┐              │
              │ INDICATION OF THE USING CONDITION OF THE │   65
              │ IDENTIFYING NAME ← USED ( = 1 )          │
              └────────────┬───────────────┘
                           │
              ┌────────────────────────────┐   66
              │ AREA FOR RETAINING THE NAME FOR │
              │ IDENTIFYING THE TASK GROUP (5230) ← K │
              └────────────┬───────────────┘
                           │◄──────────────────────────────────────────┘
              ┌────────────────────────────────────────┐   68
              │ NAME FOR IDENTIFYING THE TASK BEING EXECUTED (5100 J ) │
              │ ← NAME OF THE CORRESPONDING TASK                       │
              │ NAME FOR IDENTIFYING THE TASK GROUP (5101(J))          │
              │ ← K                                                    │
              └────────────┬───────────────────────────┘
              ┌────────────────────────────────────────┐   69
              │ COUNTER FOR THE TASK BEING EXECUTED (5210) │
              │ ← COUNTER FOR THE TASK BEING EXECUTED (5210)+1 │
              └────────────┬───────────────────────────┘
              ┌────────────────────────────┐   6A
              │    START PROCESSING         │
              │ THE CORESPONDING TASK       │
              └────────────┬───────────────┘
                    ┌─────────────┐
                    │ PROCESSING  │
                    │ COMPLETED   │
                    └─────────────┘
```

FLOWCHART ILLUSTRATING AN EXAMPLE OF THE PROCESSING
WHEN THE TASK IS ROLLED IN

# FIG.6

```
        ┌──────────────┐
        │    START     │
        │  PROCESSING  │
        └──────────────┘
               │
               │                                      71
┌──────────────────────────────────────────────────┐
│ COUNTER FOR THE TASK BEING EXECUTED (5210)        │
│ ← COUNTER FOR THE TASK BEING EXECUTED (5210)- 1   │
└──────────────────────────────────────────────────┘
               │
               │                              72
        ╱──────────────────────────╲  No
       ╱  COUNTER FOR THE TASK BEING ╲──────────────┐
       ╲   EXECUTED (5210) = 0       ╱               │
        ╲──────────────────────────╱                │
               │                                     │
               │ Yes                                 │
┌──────────────────────────────────────────┐  73    │
│ K← AREA FOR RETAINING THE NAME IDENTIFYING │       │
│ THE TASK GROUP (5230)                      │       │
└──────────────────────────────────────────┘        │
               │                                     │
┌──────────────────────────────────────────┐  74    │
│ INDICATION OF THE USING CONDITION OF THE   │       │
│ IDENTIFYING NAME UNUSED ← (5110[K]) ← (=0) │       │
└──────────────────────────────────────────┘        │
               │                                     │
               │◄────────────────────────────────────┘
               │
┌──────────────────────────────┐  75
│  ROLL OUT THE TASK EXECUTING  │
│         ENVIRONMENT           │
└──────────────────────────────┘
               │
┌──────────────────────────────────────────┐  76
│ IDENTIFYING NAME (5100[J])                 │
│ ← PROCESSOR IN VACANT CONDITION            │
└──────────────────────────────────────────┘
               │
        ┌──────────────┐
        │  PROCESSING  │
        │  COMPLETED   │
        └──────────────┘
```

FLOWCHART ILLUSTRATING AN EXAMPLE OF THE PROCESSING
WHEN THE TASK IS ROLLED OUT

# F I G.7

```
        ╭─────────────╮
        │    START    │
        │ PROCESSING  │
        ╰──────┬──────╯
               │
   ┌───────────────────────────┐
   │ ROLL OUT THE TASK (FIG.6) │─81
   └───────────┬───────────────┘
               │
   ┌───────────────────────────────────┐
   │ DISPATCHING CONTROL FLAG (5220)    │─82
   │ ← DISPATCHING DISABLE CONDITON (≠0)│
   └───────────┬───────────────────────┘
                                       83
   ┌─────────────────────────────────────────────────┐
   │ SEARCH THE CONTROL TABLE (510) AND ALL THE       │
   │ PROCESSORS EXECUTING THE TASK WHICH RETAINS THE  │
   │ SAME IDENTIFYING NAME AS THAT OF THE             │
   │ CORRESPONDING TASK                               │
   └───────────┬─────────────────────────────────────┘
                                    84
          ╱────────────────────────╲  No
         ⟨ THE CORRESPONDING         ⟩──────┐
          ╲ PROCESSOR IS PRESENT ?  ╱       │
           ────────────┬───────────         │
               │ Yes                        │
   ┌───────────────────────────┐            │
   │ INTERRUPT THE CORRESPONDING│─85         │
   │        PROCESSOR           │            │
   └───────────┬───────────────┘            │
               │                            │
   ┌───────────────────────────┐            │
   │ RECEIVE A REPLY SIGNAL     │─86         │
   └───────────┬───────────────┘            │
               │◄───────────────────────────┘
   ┌───────────────────────────────────────┐
   │ PASS THE CONTROL TO THE DEBUGGING      │
   │ OPERATION OR THE EXCEPTIONAL PROCESSING │
   └───────────┬───────────────────────────┘
               │                    87
        ╭─────────────╮
        │ PROCESSING  │
        │  COMPETED   │
        ╰─────────────╯
```

FLOWCHART ILLUSTRATING AN EXAMPLE OF THE PROCESSING
WHEN THE EXECUTION OF THE TASK IS STOPPED

# FIG.8

START
PROCESSING

ROLL OUT THE TASK (FIG.6) ⎯91

TRANSMIT THE REPLY SIGNAL
TO A SOURCE PROCESOR ⎯92

PASS THE CONTROL TO A TASK
DISPATCHING MECHANISM ⎯93

PROCESSING
COMPLETED

FLOWCHART ILLUSTRATING AN EXAMPLE OF THE PROCESSING
WHEN THE PROCESSING INTERRUPT SIGNAL IS RECEIVED

# FIG.9

START
PROCESSING

101

DISPATCHING CONTROL FLAG (5220)
← DISPATCHING ENABLE CONDITION ( = 0 )

PROCESSING
COMPLETED

FLOWCHART ILLUSTRATING AN EXAMPLE OF THE PROCESSING
WHEN THE EXECUTION OF THE TASK IS RESUMED